# EUROPÄISCHE PATENTSCHRIFT

(11) **EP 3 931 134 B1**
(45) Veröffentlichungstag und Bekanntmachung des Hinweises auf die Patenterteilung: **29.11.2023**
(21) Anmeldenummer: 20707396.6
(22) Anmeldetag: 25.02.2020
(51) Int. Cl.: F04F 5/20, F04F 5/46, F04F 5/54, B65G 47/91

(54) **VORRICHTUNG ZUR ERZEUGUNG VON UNTERDRUCK**
DEVICE FOR GENERATING VACUUM
DISPOSITIF POUR GÉNÉRER DU VIDE

(30) Priorität: 25.02.2019 DE 102019202540
(43) Veröffentlichungstag der Anmeldung: 05.01.2022
(73) Patentinhaber: Deutsches Institut für Lebensmitteltechnik e.V., 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2020/054917
(87) Internationale Veröffentlichungsnummer: WO 2020/173944

(56) Entgegenhaltungen:
- DE-A1- 1 935 193
- DE-A1- 3 427 645
- DE-A1-102015 011 864
- JP-A- H08 326 700
- US-A- 5 159 961

## Beschreibung

Die vorliegende Erfindung stellt eine Vorrichtung und ein mit der Vorrichtung durchführbares Verfahren zur Erzeugung von Unterdruck bereit, die mit einem Druckfluid angetrieben werden. Das Druckfluid kann eine unter Überdruck stehende Flüssigkeit sein, bevorzugt ein unter Überdruck stehendes Gas, das auch als Druckgas bezeichnet wird. Die Vorrichtung zeichnet sich durch eine gestreckte Bauform und eine Strömungsführung aus, die eine energieeffiziente Erzeugung von Unterdruck erlaubt.

Bekannte Strahlpumpen weisen für ein Druckfluid eine Treibdüse auf, die auf einer gemeinsamen Längsmittelachse mit einer Mischkammer angeordnet ist, deren Querschnitt von ihrem Einlass zulaufen kann und sich zu einem gegenüberliegenden Auslass aufweiten kann, wobei der Zulauf für ein angesaugtes Fluid radial zu der Längsmittelachse in dem Bereich angeschlossen ist, in dem die Treibdüse in einem Abstand vor der Mischkammer mündet.

### Stand der Technik

Die DE 34 27 645 A1 zeigt eine Gasstrahlpumpe, in der ein Injektionskanal für ein Druckfluid kolinear in einen Ausströmkanal mündet, der in einem Rohrabschnitt gehaltert ist. Dieser Rohrabschnitt ist an dem Gehäuse, das den Injektionskanal umgibt, mittels einer Flanschverbindung befestigt. Die Flanschverbindung dichtet mittels eines ringförmigen Vorsprungs außen am Injektionskanal oder mittels eines einzelnen Dichtungsrings, der zwischen der Außenseite des Injektionskanals und den aneinander angrenzenden Innenkanten des Flanschs des Gehäuses und des Flanschs des Rohrabschnitts eingepresst wird.

Die DE 1 935 193 A1 zeigt eine Ansaugvorrichtung, bei der in gegenüberliegende Muffen eines T-Rohrstücks eine Düse und in einem Abstand davon ein sich aufweitendes Rohrstück einsteckt und jeweils mit Stiften gehalten sind. Der zu den gegenüberliegenden Muffen senkrechte Anschluß kann zum Ansaugen dienen.

Die US 5,159,961 A zeigt eine Strahlpumpe, bei der zwei entlang einer Achse aneinandergesteckte Rohrstücke zwischen sich eine Kammer größeren Querschnitts bilden, in die senkrecht ein Rohr ragt, das eine Auslaßöffnung für Druckgas hat.

Die JP H08 326700 A zeigt ein T-förmiges Rohrstück, an dessen Muffen ein Rohrstück mit einer Düse, gegenüberliegend ein Rohrstück als Diffusor und senkrecht dazu ein Vakuumanschluß angebracht sind.

### Aufgabe der Erfindung

Der Erfindung stellt sich die Aufgabe, eine alternative Vorrichtung und ein damit durchführbares Verfahren bereitzustellen, die die Zuleitung eines Druckfluids zwischen Einlass und Auslass der Vorrichtung erlauben und die weiter bevorzugt eine energieeffiziente Erzeugung von Unterdruck erlauben sollen. Weiter soll die Vorrichtung leicht zu reinigen sein, bevorzugt einfach und ohne Werkzeug zu zerlegen und zusammenzusetzen sein, um die Reinigung der Kanäle zu erleichtern.

### Beschreibung der Erfindung

Die Erfindung löst die Aufgabe mit den Merkmalen der Ansprüche und insbesondere mit einer Vorrichtung zur Erzeugung von Unterdruck mittels eines Druckfluids, die einen Einströmkanal und einen Ausströmkanal aufweist und für ein Druckfluid einen Injektionskanal, dessen Auslass in einem Abstand zum Einlass des Einströmkanals angeordnet ist. In der Vorrichtung sind der Einströmkanal, der Injektionskanal und der Ausströmkanal entlang einer gemeinsamen Längsmittelachse angeordnet, wobei der Injektionskanal und der Ausströmkanal runde Innenquerschnitte haben. Dabei ist der Injektionskanal zwischen dem Einströmkanal und dem Ausströmkanal angeordnet. Durch die Anordnung von Einströmkanal, Injektionskanal und Ausströmkanal entlang einer gemeinsamen Längsmittelachse wird ein günstiger Strömungsverlauf erhalten, der bevorzugt mittels des aus dem Injektionskanal ausströmenden Druckfluids eine effiziente Erzeugung eines Unterdrucks am Einlass des Einströmkanals erlaubt.

Der Unterdruck wirkt durch den Einströmkanal bis an dessen Einlass, und der Einströmkanal leitet in den Einlass eingesaugtes Fluid zu seinem Auslass. Am Auslass des Einströmkanals ist der Auslass des Injektionskanals angeordnet, und in einem Abstand davon der Einlass des Ausströmkanals. Dabei sind der Auslass des Einströmkanals und der Auslass des Injektionskanals dem Einlass des Ausströmkanals zugewandt. Durch die koaxiale Anordnung von Injektionskanal und Einströmkanal und die koaxiale Anordnung des Auslasses des Einströmkanals um den Auslass des Injektionskanals wird das durch den Einströmkanal angesaugte Fluid in derselben Richtung und parallel zum Druckfluid geleitet, die beide in derselben Richtung in den Einlass des Ausströmkanals strömen. Der Ausströmkanal leitet das Druckfluid in Mischung mit eingesaugtem Fluid von seinem Einlass zu seinem Auslass.

Der Injektionskanal verjüngt sich in einem ersten Abschnitt von seinem Einlass und weitet sich bevorzugt angrenzend in einem endständigen Abschnitt zu seinem Auslass auf. Der endständige Abschnitt des Injektionskanals kann einen konstanten Querschnitt aufweisen, sich zu seinem Auslass verjüngen, oder weitet sich bevorzugt zu seinem Auslass auf und bildet eine Lavaldüse. Optional weist der Injektionskanal zwischen seinem ersten Abschnitt und seinem endständigen Abschnitt einen zweiten Abschnitt konstanten Durchmessers auf.

Der Injektionskanal ist vollständig oder abschnittsweise innerhalb des Trägers gebildet. Der endständige Abschnitt des Injektionskanals ist vollständig innerhalb des Trägers ausgebildet und z.B. ist der Auslass des Injektionskanals bündig mit einer Oberfläche des Trägers angeordnet, z.B. bündig mit dessen endständigem Querschnitt.

Bevorzugt weist der Injektionskanal angrenzend an seinen Auslass einen freitragenden Abschnitt auf, der nur mit zumindest oder mit genau einem radial in den Einströmkanal ragenden Träger verbunden ist, der diesen freitragenden Abschnitt des Injektionskanals trägt. Der Einlass des Injektionskanals ist mit einer Zuleitung für Druckfluid verbunden, die innerhalb des Trägers angeordnet ist und einen Anschlussabschnitt hat, der sich radial zur Längsmittelachse erstreckt. Der sich radial zur Längsmittelachse erstreckende Anschlussabschnitt der Zuleitung für Druckfluid mündet auf der Außenseite der Vorrichtung in einem Anschluss, z.B. einem Schraubanschluss, in einem Bereich entlang der Vorrichtung, z.B. zwischen dem Einlass des Einströmkanals und dem Auslass des Injektionskanals auf der Außenseite der Vorrichtung.

Bevorzugt weist die Zuleitung einen Abschnitt innerhalb des Trägers auf, der sich entlang der gemeinsamen Längsmittelachse bis angrenzend an den Einlass des Injektionskanals erstreckt, wobei dieser Abschnitt der Zuleitung für Druckfluid bevorzugt einen zylindrischen Querschnitt gleich dem Querschnitt des Einlasses am ersten Abschnitt des Injektionskanals aufweist.

Der Träger erstreckt sich radial in den Einströmkanal und kann ausschließlich aus einem Träger bestehen, der sich von der Wand des Einströmkanals zum Injektionskanal erstreckt und diesen enthält, oder der Träger kann aus zwei Teilen bestehen, die sich jeweils von der Wand des Einströmkanals zum Injektionskanal erstrecken, z.B. in einem Winkel zwischen den Teilen des Trägers von 90° bis bevorzugt 180°, z.B. um die Längsmittelachse. Dabei kann in jedem Teil des Trägers ein Teil der Zuleitung gebildet sein, so dass auch der Anschlussabschnitt der Zuleitung in zwei Teilen ausgebildet ist, die sich radial zur Längsmittelachse in jeweils einem Teil des Trägers erstrecken.

Der Einströmkanal bildet an seinem Auslass einen Abschnitt ringförmigen Querschnitts um den freitragenden Abschnitt des Injektionskanals bis angrenzend an den Einlass des Ausströmkanals. Es hat sich gezeigt, dass der ringförmige Querschnitt des Einströmkanals um den freitragenden Abschnitt des Injektionskanals bevorzugt koaxial um die gemeinsame Längsmittelachse gebildet ist.

Der Einlass des Ausströmkanals ist bevorzugt in einem Abstand vom Injektionskanal, bzw. von dessen Auslass angeordnet. Weniger bevorzugt ist der Auslass des Injektionskanals innerhalb eines ersten Abschnitts des Ausströmkanals angeordnet, wobei ein ringförmiger lichter Querschnitt zwischen der Außenfläche des freitragenden Abschnitts des Injektionskanals und dem ersten Abschnitt des Ausströmkanals gebildet wird. In diesen ringförmigen lichten Querschnitt kann aus dem Einströmkanal austretendes Fluid einströmen.

Der Ausströmkanal verjüngt sich in einem ersten Abschnitt von seinem Einlass zu einem zweiten Abschnitt konstanten Durchmessers und weitet sich angrenzend an seinen zweiten Abschnitt in einem dritten Abschnitt zu seinem Auslass auf.

Am Einlass des Einströmkanals kann eine Saugglocke angeschlossen sein, so dass der Unterdruck durch den Einströmkanal bis in das Innere der Saugglocke geleitet wird.

Der Träger mit dem Injektionskanal ist einschließlich des freitragenden Abschnitts des Injektionskanals einstückig mit dem Einströmkanal ausgebildet. Optional ist der Ausströmkanal einstückig mit dem Einströmkanal und dem Injektionskanal ausgebildet.

Bevorzugt ist der Ausströmkanal in einem rohrförmigen Element ausgebildet, das einen endständigen Abschnitt aufweist, der lösbar, z.B. durch eine Klemmverbindung oder Schraubverbindung, mit dem Einströmkanal verbunden ist und den freitragenden Abschnitt des Injektionskanals umfasst. Die Klemmverbindung kann eine einfache Steckverbindung oder ein Bajonettverschluss sein, wobei ein endständiger Abschnitt des rohrförmigen Elements, in dem der Ausströmkanal gebildet ist, den Abschnitt des Zentralstücks umfasst, in dem der freitragende Abschnitt des Injektionskanals angeordnet ist, oder wobei der Abschnitt des Zentralstücks, in dem der freitragende Abschnitt des Injektionskanals angeordnet ist, einen endständigen Abschnitt des rohrförmigen Elements umfasst, in dem der Ausströmkanal gebildet ist. Generell bevorzugt ist ein endständiger Abschnitt des rohrförmigen Elements, in dem der Ausströmkanal ausgebildet ist, ausschließlich dadurch mit dem Zentralstück verbunden, dass der endständige Abschnitt des rohrförmigen Elements das Zentralstück in dem Bereich umfasst oder von diesem umfasst wird, in dem der freitragende Abschnitt des Injektionskanals angeordnet ist.

Bevorzugt ist der Einströmkanal von einem Zentralstück, das den Träger und den Injektionskanal enthält, und einem mit dem Zentralstück lösbar verbundenen Rohrstück gebildet. Das Zentralstück enthält den Injektionskanal einschließlich seines freitragenden Abschnitts und die Zuleitung, und ist bevorzugt einstückig ausgebildet.

Das Rohrstück, in dem ein Teil des Einströmkanals angeordnet oder ausgebildet ist, kann einen Abschnitt aufweisen, der den Bereich mit ringförmigem Querschnitt umfasst und/oder den Bereich umfasst, der zumindest anteilig vom Träger ausgebildet wird. Bevorzugt weist das Rohrstück, in dem ein Teil des Einströmkanals angeordnet oder ausgebildet ist, einen Abschnitt auf, der den Bereich des Zentralstücks umfasst, in dem ein Teil der Zuleitung, insbesondere ein Anschlussabschnitt der Zuleitung, der sich radial zur Längsmittelachse erstreckt, angeordnet ist. Dabei kann der Abschnitt des Rohrstücks, der das Zentralstück umfasst, einen Teil der Wand der Zuleitung, insbesondere von deren Anschlussabschnitt bilden. Alternativ kann die Wand, die den Bereich mit ringförmigem Querschnitt in seinem äußeren Durchmesser begrenzt, von einem Abschnitt des Rohrstücks gebildet sein. Der Abschnitt des Rohrstücks kann z.B. eine lösbare Klemmverbindung, Steckverbindung oder Schraubverbindung mit dem Zentralstück bilden, in dem der freitragende Abschnitt des Injektionskanals angeordnet ist.

Generell sind Ausführungsformen bevorzugt, bei denen ein Zentralstück, das den Träger und den Injektionskanal sowie die Zuleitung enthält, lösbar mit einem Rohrstück verbunden, in dem ein Teil des Einströmkanals angeordnet oder gebildet ist und/oder lösbar mit einem rohrförmigen Element verbunden, in dem der Ausströmkanal gebildet ist. Das rohrförmige Element kann einen endständigen Abschnitt aufweisen, der lösbar mit dem Einströmkanal oder mit dem Zentralstück verbunden ist und z.B. den freitragenden Abschnitt des Injektionskanals umfasst. Solche Ausführungsformen haben den Vorteil, nach Entfernen des Zentralstücks vom Rohrstück und/oder vom rohrförmigen Element eine einfache Reinigung zu erlauben, z.B. in einem Verfahren zum Ansaugen eines Gegenstands mittels der Vorrichtung. Entsprechend betrifft die Erfindung auch ein Verfahren zur Reinigung mit dem Schritt des Entfernens des Zentralstücks vom Rohrstück und/oder vom rohrförmigen Element, Entfernen von Ablagerungen, z.B. mittels Druckgas oder durch Spülen mit einer Flüssigkeit, und neuerliches Verbinden des Zentralstücks mit dem Rohrstück und/oder dem rohrförmigen Element. Die Vorrichtung und das Verfahren haben den Vorteil, angesaugte Bestandteile des Gegenstands, der z.B. ein Lebensmittel sein kann, oder Staub, nach einfachem Zerlegen der Vorrichtung durch Entfernen der lösbar verbundenen Bestandteile reinigen zu können und anschließend die Bestandteile wieder miteinander verbinden zu können. Generell kann das Rohrstück eine Ausnehmung aufspannen, in die ein Abschnitt des Zentralstücks, der gegenüber dem rohrförmigen Element liegt, eingesteckt wird oder eingeschraubt wird. Dabei weist der Abschnitt des Zentralstücks, der in die Ausnehmung des Rohrstücks einsteckbar ist, bevorzugt umlaufende Dichtungsringe auf. Es hat sich gezeigt, dass eine einfache Klemmverbindung, bei der ein Abschnitt des Zentralstücks mit umlaufenden Dichtungsringen versehen in eine Ausnehmung des Rohrstücks eingesteckt ist, ausreichend fest ist. Die Ausnehmung des Rohrstücks kann z.B. zylindrisch sein, optional mit zylindrischen Abschnitten verschiedener Durchmesser.

Es hat sich gezeigt, dass eine lösbare Verbindung, z.B. in Form einer Steckverbindung oder Klemmverbindung, eines Bajonettverschlusses oder einer Schraubverbindung mit zumindest einem Gewinde aus Kunststoff, bei der ein endständiger Abschnitt des rohrförmigen Elements, in dem der Ausströmkanal gebildet ist, den Abschnitt des Zentralstücks, in dem der freitragende Abschnitt des Injektionskanals angeordnet ist, umfasst oder von diesem umfasst wird, eine hinreichend stabile Verbindung dieses rohrförmigen Elements mit dem Zentralstück bildet. Die Stabilität dieser Verbindung auch bei einer einfachen Klemm- oder Steckverbindung wird gegenwärtig darauf zurückgeführt, dass ein aus dem Injektionskanal austretendes Fluid, das in den Ausströmkanal eintritt, zwischen diesen einen Unterdruck erzeugt. Die Klemmverbindung kann z.B. von jeweils rotationssymmetrischen Oberflächen gebildet sein, die entlang der Längsmittelachse übereinander verschieblich sind. Generell bevorzugt ist eine Steckverbindung oder Klemmverbindung rotationssymmetrisch ausgebildet und weist weiter bevorzugt kein Gewinde auf.

Bevorzugt ist das Zentralstück allein durch Verschieben entlang der Längsmittelachse, weiter bevorzugt ohne Rotationsbewegung, mit einer Ausnehmung eines Rohrstücks verbindbar. Generell kann das Rohrstück die Ausnehmung zur Aufnahme eines Abschnitts des Zentralstücks aufspannen und Teil einer Platte, einer Wandung oder einer Saugglocke sein.

Beim Verfahren zum Ansaugen eines Gegenstands wird die Zuleitung zum Injektionskanal bevorzugt mit Druckluft als Druckfluid beaufschlagt. Bei diesem Verfahren zum Erzeugen von Unterdruck am Einlass des Einströmkanals hat sich gezeigt, dass das rohrförmige Element, in dem der Ausströmkanal gebildet ist, an das Zentralstück gezogen wird. Das rohrförmige Element, in dem der Ausströmkanal gebildet ist, war per Hand leichtgängig auf den Abschnitt des Zentralstücks aufgeschoben. Diese Klemmverbindung war ausreichend stabil, da das das rohrförmige Element bei Beaufschlagen des Injektionskanals mit Druckfluid an das Zentralstück gezogen wird.

In einer Ausführungsform ist der Einströmkanal fest mit dem Zentralstück verbunden, z.B. einstückig ausgebildet, und ein rohrförmiges Element, das den Ausströmkanal enthält, ist lösbar, insbesondere mittels eine Klemm- oder Steckverbindung, mit dem Zentralstück verbunden.

Diese und alternative Ausführungsformen können einstückig sein und können z.B. durch ein dreidimensionales Druckverfahren aus härtender Kunststoffmasse hergestellt werden, die z.B. ein Thermoplast oder eine duroplastische Kunststoffmasse ist.

Bevorzugt weist die Vorrichtung einen Schalldämpfer auf, der von einem elastischen Schlauchstück gebildet wird, das dicht am Auslass des Ausströmkanals angeordnet ist, dessen gegenüberliegendes Ende verschlossen ist und das zumindest einen Schlitz in seiner Wand aufweist. Ein solches Schlauchstück kann dicht an einem Ring befestigt sein, der lösbar, insbesondere nur klemmend und längsverschieblich, mit der Außenfläche des Ausströmkanals verbunden ist.

Bevorzugt weist die Zuleitung für Druckfluid einen in einem Rohrstück gebildeten ringförmigen Abschnitt auf, durch den Druckfluid in jeder Drehstellung des Zentralstücks zum Rohrstück in den Injektionskanal strömen kann. Dabei ist der dem rohrförmigen Element gegenüberliegende Abschnitt des Zentralstücks bevorzugt klemmend und drehbar in einer Ausnehmung eines Rohrstücks angeordnet, in dem ein ringförmiger Abschnitt einer Zuleitung für Druckfluid gebildet ist, der fluiddicht mit dem Injektionskanal verbunden ist

Im Verfahren wird die Zuleitung mit einem Druckfluid beaufschlagt, das in den Injektionskanal strömt, nämlich durch den Einlass des Injektionskanals in dessen ersten Abschnitt strömt, durch dessen optionalen zweiten Abschnitt und durch dessen endständigen Abschnitt strömt und aus dessen Auslass austritt und in den Einlass des Ausströmkanals eintritt und dabei durch den Einströmkanal angesaugtes Fluid in den Ausströmkanal beschleunigt, das aus dem Auslass des Einströmkanals in einen Abschnitt ringförmigen Querschnitts strömt, der vom Einströmkanal um den freitragenden Abschnitt des Injektionskanals gebildet ist. Das Druckfluid strömt in Mischung mit dem durch den Einströmkanal angesaugten Fluid durch einen ersten Abschnitt des Ausströmkanals, dessen zweiten Abschnitt und dessen dritten Abschnitt und tritt aus dem Auslass des Ausströmkanals aus. Dabei umströmt durch den Einströmkanal angesaugtes Fluid den Träger, der sich radial in den Einströmkanal erstreckt und in dem das Druckfluid durch den Injektionskanal strömt.

Im Verfahren ist das Druckfluid bevorzugt ein Druckgas, z.B. Luft oder Stickstoff, das z.B. mit einem Überdruck von 0,1 bis 10 bar, z.B. 1 bis 5 bar, die Zuleitung beaufschlagt. Die Figuren zeigen Ausführungsformen der Vorrichtung. Dabei bezeichnen gleiche Bezugsziffern funktionsgleiche Elemente.

Die Erfindung wird nun mit Bezug auf die Figuren beschrieben:
- Fig. 1 zeigt eine nicht erfindungsgemäße einstückige Vorrichtung, in A) im Schnitt A-A senkrecht zur Längsmittelachse, in B) im Längsschnitt B-B entlang der Längsmittelachse, in C) in Aufsicht auf den Einlass des Einströmkanals,
- Fig. 2 zeigt eine zweiteilige Ausführungsform des Trägers und des Ausströmkanals A) in Aufsicht, B) im Schnitt A-A und C) im Schnitt B-B, in D) im Längsschnitt C-C der Aufsicht E) auf den Träger aus Sicht des Einlasses des Einströmkanals,
- Fig. 3 zeigt eine Ausführungsform mit einem Schalldämpfer am Ausströmkanal, in A) in Aufsicht, in B) im Längsschnitt,
- Fig. 4 zeigt eine Ausführungsform in Explosionszeichnung, in A) in Aufsicht, in B) im Längsschnitt A-A, in C) in Aufsicht auf den Auslass des Ausströmkanals, jeweils ohne Darstellung des Einströmkanals, in D) eine in einer Ausnehmung eines Rohrstücks angeordnete Ausführungsform, und
- Fig. 5 zeigt eine Vorrichtung, die an einer Saugglocke angeschlossen ist, in A) in Aufsicht auf die Außenfläche der Saugglocke bzw. aus Richtung auf den Auslass des Ausströmkanals, in B) in Seitenansicht auf die Vorrichtung, und in C) im Schnitt A-A von A) parallel zur Längsmittelachse.

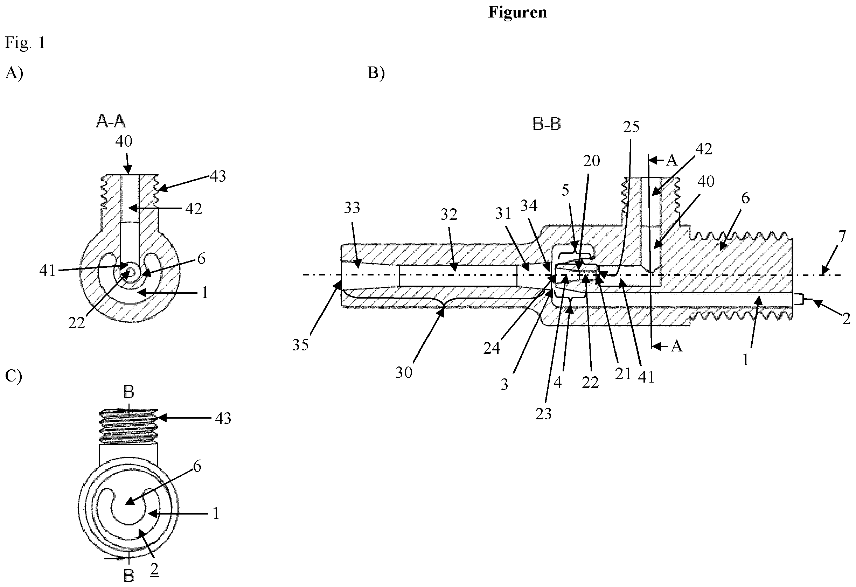

Die Figur 1 zeigt eine einstückige und daher nicht erfindungsgemäße Vorrichtung mit einem Einströmkanal 1, der sich von seinem Einlass 2 bis zu seinem Auslass 3 erstreckt, der einen Bereich 4 mit ringförmigem Querschnitt um den freitragenden Abschnitt 5 des Injektionskanals 20 bildet. Der freitragende Abschnitt 5 des Injektionskanals 20 endet mit dem Auslass 24 des Injektionskanals 20, der angrenzend an seinen Einlass 25 einen ersten Abschnitt 21 aufweist, der sich von seinem Einlass 25 zu einem zweiten Abschnitt 22, der einen konstanten Querschnitt aufweist, verjüngt. Vom zweiten Abschnitt 22 vergrößert sich der Querschnitt des Injektionskanals 20 in einem anschließenden endständigen Abschnitt 23 bis zu seinem Auslass 24. Der Injektionskanal 20 ist in einem Träger 6 gebildet, der sich radial von der Wandung in den Einströmkanal 1 erstreckt und den Querschnitt des Einströmkanals 1 zumindest abschnittsweise zu einer abschnittsweisen Ringform, bzw. C-Form beschränkt. Der Träger 6 ist einstückig mit dem Injektionskanal 20 und dessen freitragenden Abschnitt 5 ausgebildet.

Der Ausströmkanal 30 erstreckt sich von seinem Einlass 34 an seinem ersten Abschnitt 31, dessen Querschnitt sich zu einem zweiten Abschnitt 32 konstanten Durchmessers verjüngt, durch seinen zweiten Abschnitt und einen anschließenden dritten Abschnitt 33, dessen Querschnitt sich zu seinem Auslass 35 erweitert.

Der Auslass 24 des Injektionskanals 20 ist in der hier gezeigten Variante in einem Abstand zum Einlass 34 des Ausströmkanals 30 angeordnet, so dass zwischen dem Auslass 24 des Injektionskanals 20 und dem Einlass 34 des Ausströmkanals ein ringförmiger Bereich begrenzt wird, der mit dem Bereich 4 mit ringförmigem Querschnitt, den der Einströmkanal 1 aufspannt, in Verbindung steht.

Eine Zuleitung 40 für Druckfluid ist mit dem Einlass 25 des Injektionskanals 20 verbunden und weist entsprechend einer bevorzugten Ausführungsform einen koaxialen Abschnitt 41 entlang der Längsmittelachse 7 auf, der denselben Durchmesser wie der Einlass 25 des Injektionskanals 20 hat. Ein Anschlussabschnitt 42 der Zuleitung 40 für Druckfluid erstreckt sich radial zur Längsmittelachse 7 und mündet auf der Außenseite der Vorrichtung in einem Schraubanschluss 43.

In dieser Ausführungsform ist die gesamte Vorrichtung einstückig ausgebildet. Diese Ausführungsform ließ sich mittels 3D-Drucks herstellen, z.B. durch schichtweises Auftragen einer härtenden Kunststoffmasse herstellen, ausgehend vom Bereich des Einlasses 2 des Einströmkanals 1 in Richtung des Auslasses 35 des Ausströmkanals 30.

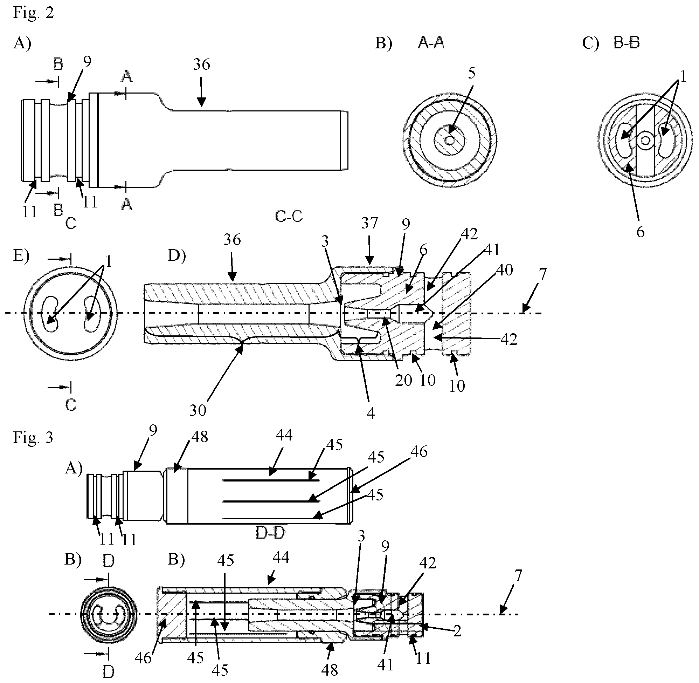

Die Figur 2 zeigt eine bevorzugte Ausführungsform, bei der der Träger 6 mit dem Injektionskanal 20 einschließlich seines freitragenden Abschnitts 5 und der Zuleitung 40 und zumindest ein Anteil des Bereichs 4 mit ringförmigem Querschnitt in einem Zentralstück 9 enthalten sind, mit dessen einem Ende lösbar ein rohrförmiges Element 36 und an dessen gegenüberliegenden Ende lösbar ein Rohrstück 8 verbindbar sind. Wegen der Lage der Schnittebene in Fig. 2 D) ist dort der im Zentralstück 9 gebildete Einströmkanal 1 nicht sichtbar. In dem rohrförmigen Element 36 ist der Ausströmkanal 30 ausgebildet. Das rohrförmige Element 36 weist einen endständigen Abschnitt 37 auf, der den freitragenden Abschnitt 5 des Injektionskanals 20 umfasst und das lösbar mit dem Einströmkanal 1 oder mit dem Zentralstück 9 verbunden ist, hier mittels einer Klemmverbindung. Das Zentralstück 9 dieser Ausführungsform weist einen Stutzen, der durch den Abschnitt gegenüber dem rohrförmigen Element 36 gebildet ist, zur klemmenden Verbindung mit einem Rohrstück auf, in dem der Einströmkanal 1 anzuordnen oder gebildet ist.

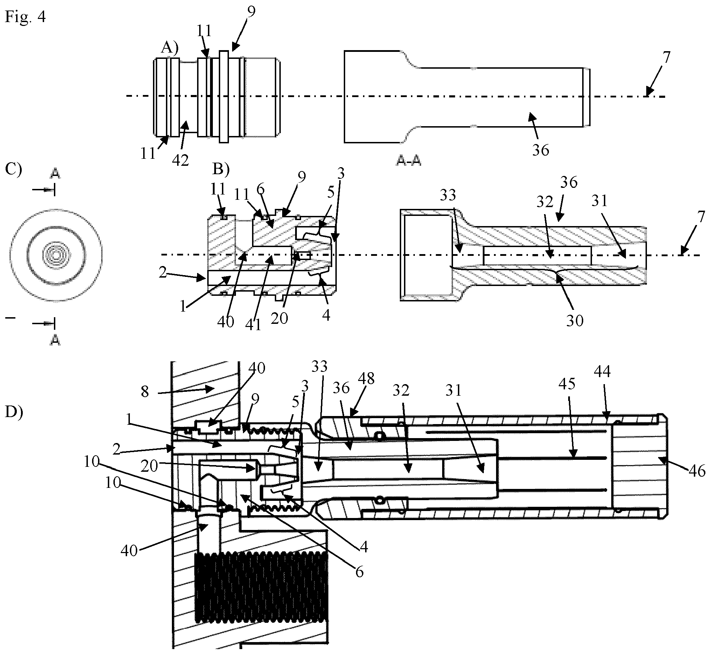

Fig. 2 zeigt in D) eine Ausführungsform, bei der sich der Träger 6 in zwei Teilen durch den Einströmkanal 1 erstreckt und diesen im Bereich des Trägers 6 in zwei Teile unterteilt, wie in Fig. 2C) und 2E) gezeigt. Die Zuleitung 40 ist in zwei Teilen ausgebildet, die sich radial zur Längsmittelachse 7 in jeweils einem Teil des Trägers 6 erstrecken. Die Ausbildung des Trägers 6 in zwei Teilen, die sich radial durch den Einströmkanal 1 erstrecken, kann in der bevorzugten Ausführungsform ausgebildet sein, in der der Träger 6, der Injektionskanal 20 und die Zuleitung 40 in einem Zentralstück 9 ausgebildet sind, und der Ausströmkanal 30 in einem lösbar mit dem Zentralstück 9 verbundenen rohrförmigen Element 36 enthalten ist und der Einströmkanal 1 in einem Rohrstück 8 (abschnittsweise in Fig. 4D gezeigt) enthalten ist, das lösbar mit dem Zentralstück 9 verbunden ist.

Fig. 2 B) zeigt, dass der Einströmkanal 1 den Bereich 4 mit ringförmigem Querschnitt um den freitragenden Abschnitt 5 des Injektionskanals 20 bildet.

Fig. 3 zeigt in A) und B) eine bevorzugte Ausführungsform der Vorrichtung, in der der Einströmkanal nicht gezeigt ist, mit einem Schalldämpfer, der ein elastisches Schlauchstück 44 mit zumindest einem Schlitz 45 als Durchbrechung, vorliegend parallel zur Längsmittelachse 7 angeordnet, aufweist. Das Schlauchstück 44 übergreift den Auslass 35 des Ausströmkanals 30 und ist mit einem endständigen Deckel 46 verschlossen. Das Schlauchstück 44 kann mittels eines Rings 48, der klemmend den Ausströmkanal 30 umfasst, mit dem Ausströmkanal 30 verbunden sein.

Fig. 4 zeigt in A) in Aufsicht sowie in B) im Längsschnitt ein Zentralstück 9 und ein rohrförmiges Element 36 und in C) im Querschnitt A-A durch ein rohrförmiges Element eine bevorzugte Ausführungsform, bei der sowohl der Ausströmkanal 30 in einem rohrförmigen Element 36 gebildet ist und lösbar mit dem Träger 6 verbunden ist, als auch der Einströmkanal 1 in einem Rohrstück 8 gebildet ist, das gegenüber dem rohrförmigen Element 36 lösbar mit dem Träger 6 verbunden ist. Das rohrförmige Element 36, das den Ausströmkanal 30 ausbildet, und das Rohrstück 8, das den Einströmkanal ausbildet, sind jeweils mit einer lösbaren Verbindung an dem Träger 6 befestigt, der den Injektionskanal 20 und die Zuleitung 40 enthält. Die lösbaren Verbindungen können jeweils unabhängig voneinander z.B. Steckverbindungen, z.B. Klemmverbindungen, oder Schraubverbindungen sein, die bevorzugt fluiddicht sind. Das Rohrstück 36 weist einen Abschnitt auf, der den Bereich 4 mit ringförmigem Querschnitt umfasst, der vom Träger 6 ausgebildet wird. Alternativ kann die Wand, die den Bereich 4 mit ringförmigem Querschnitt in seinem äußeren Durchmesser begrenzt, von einem Abschnitt des Rohrstücks 36 gebildet sein. Die umlaufenden Nuten 11 sind zur Aufnahme von Dichtungsringen 10 vorgesehen, die eine fluiddichte Klemmverbindung zwischen diesem Abschnitt des Zentralstücks 9 und einer zylindrischen Ausnehmung z.B. eines Rohrstücks bilden, in dem der Auslass 2 des Einströmkanals 1 mündet, um dort Unterdruck anzulegen.

In Fig. 4 D) ist die Ausführungsform mit zusätzlichem Schlauchstück 44, das Schlitze 45 und einen endständigen Deckel 46 als Schalldämpfer aufweist, an einem Rohrstück 8 angeordnet gezeigt. Der Abschnitt des Zentralstücks 9, der gegenüber dem rohrförmigen Element 36 liegt, das den Ausströmkanal 30 enthält, ist in eine zylindrische Ausnehmung des Rohrstücks 8 eingesteckt. Dieser Abschnitt des Zentralstücks 9 weist in umlaufenden Nuten angeordnete Dichtungsringe 10 auf, die den Abschnitt des Zentralstücks 9 gegen die zylindrische Ausnehmung im Rohrstück 8 abdichten. Da beim Beaufschlagen des Injektionskanals 20 mit Druckfluid am Einlass 2 des Einströmkanals 1 Unterdruck erzeugt wird, reicht eine einfache Steckverbindung ohne Verrastung oder ohne Gewinde zwischen dem Zentralstück 9 und dem Rohrstück 8, um das Zentralstück 9 am Rohrstück 8 zu haltern. Das Rohrstück 8 ist, wie generell bevorzugt, Teil einer Wandung, die z.B. plattenförmig oder Teil einer Saugglocke sein kann. Die Zuleitung 40 weist, wie generell bevorzugt, einen ringförmigen Abschnitt auf, durch den Druckfluid in jeder Drehstellung des Zentralstücks 9 in den Injektionskanal 20 strömen kann.

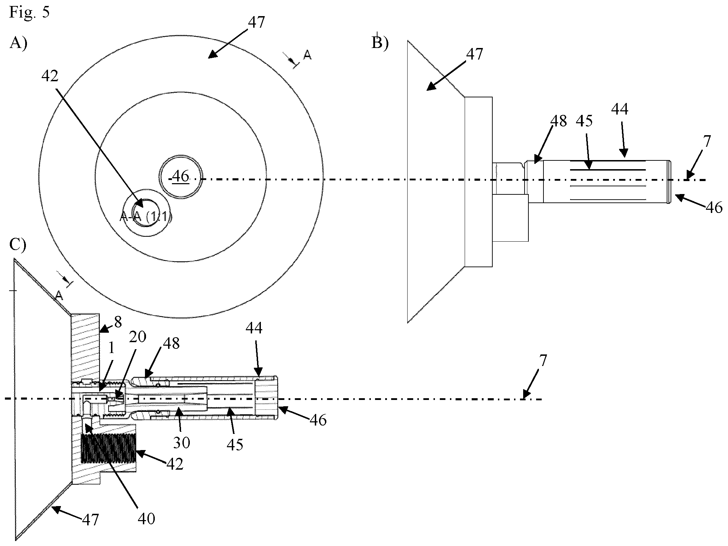

Fig. 5 zeigt in A) bis C) eine Vorrichtung mit einer Saugglocke 47, die mit dem Einlass 2 des Einströmkanals 1 verbunden ist, so dass ein Fluid aus dem Inneren der Saugglocke 47 durch den Einströmkanal 1 angesaugt werden kann, um einen Unterdruck innerhalb der Saugglocke 47 zu erzeugen. In dieser Ausführung ist der Einströmkanal 1 einstückig mit dem Zentralstück 9 ausgebildet und das rohrförmige Element 36, in dem der Ausströmkanal 30 ausgebildet ist, ist lösbar mit dem Zentralstück 9 verbunden.

**Bezugszeichenliste:**

| | | | |
|---|---|---|---|
| 1 | Einströmkanal | 30 | Ausströmkanal |
| 2 | Einlass des Einströmkanals | 31 | erster Abschnitt des Ausströmkanals |
| 3 | Auslass des Einströmkanals | 32 | zweiter Abschnitt des Ausströmkanals |
| 4 | Bereich mit ringförmigem Querschnitt | 33 | dritter Abschnitt des Ausströmkanals |
| 5 | freitragender Abschnitt des Injektionskanals | 34 | Einlass des Ausströmkanals |
| | | 35 | Auslass des Ausströmkanals |
| 6 | Träger | 36 | rohrförmiges Element |
| 7 | Längsmittelachse | 37 | endständiger Abschnitt des rohrförmigen Elements |
| 8 | Rohrstück | | |
| 9 | Zentralstück | 40 | Zuleitung |
| 10 | Dichtungsring | 41 | koaxialer Abschnitt der Zuleitung |
| 11 | Nut für Dichtungsring | 42 | Anschlussabschnitt der Zuleitung |
| 20 | Injektionskanal | 43 | Schraubanschluss |
| 21 | erster Abschnitt des Injektionskanals | 44 | Schlauchstück |
| 22 | zweiter Abschnitt des Injektionskanals | 45 | Schlitz |
| 23 | endständiger Abschnitt des Injektionskanals | 46 | endständiger Deckel |
| | | 47 | Saugglocke |
| 24 | Auslass des Injektionskanals | 48 | Ring |
| 25 | Einlass des Injektionskanals | | |

## Patentansprüche

1. Vorrichtung zur Erzeugung von Unterdruck mittels eines Druckfluids, die einen Einströmkanal (1) und einen Ausströmkanal (30) aufweist und einen Injektionskanal (20), dessen Auslass (24) in einem Abstand zum Einlass (2) des Einströmkanals (1) angeordnet ist, wobei
der Einströmkanal (1), der Injektionskanal (20) und der Ausströmkanal (30) entlang einer gemeinsamen Längsmittelachse (7) angeordnet sind,
der Injektionskanal (20) und der Ausströmkanal (30) runde Innenquerschnitte haben und
der Injektionskanal (20) sich in einem ersten Abschnitt (21) von seinem Einlass (25) verjüngt und in einem endständigen Abschnitt (23) einen Auslass (24) aufweist und der Injektionskanal (20) zumindest abschnittsweise in einem radial in den Einströmkanal (1) ragenden Träger (6) enthalten ist und der Einlass (25) des Injektionskanals (20) mit einer Zuleitung (40) für Druckfluid verbunden ist, die innerhalb des Trägers (6) angeordnet ist und einen Anschlussabschnitt (42) hat, der sich radial zur Längsmittelachse (7) erstreckt,
wobei der Einströmkanal (1) einen Bereich (4) ringförmigen Querschnitts um den freitragenden Abschnitt (5) des Injektionskanals (20) bis angrenzend an den Einlass (34) des Ausströmkanals (30) bildet,
der Einlass (34) des Ausströmkanals (30) in einem Abstand vom Auslass (24) des Injektionskanals (20) oder der Auslass (24) des Injektionskanals (20) innerhalb des Ausströmkanals (3) angeordnet ist und
der Ausströmkanal (30) sich in einem ersten Abschnitt (31) von seinem Einlass (34) zu einem zweiten Abschnitt (32) konstanten Durchmessers verjüngt und sich angrenzend in einem dritten Abschnitt (33) zu seinem Auslass (35) aufweitet, wobei der Träger (6), der Injektionskanal (20) und die Zuleitung (40) in einem Zentralstück (9) enthalten sind, **dadurch gekennzeichnet, dass** der Ausströmkanal (30) in einem rohrförmigen Element (36) gebildet ist, das ausschließlich dadurch lösbar mit dem Zentralstück (9) verbunden ist, dass ein endständiger Abschnitt (37) des rohrförmigen Elements (36), in dem der Ausströmkanal (30) gebildet ist, den Abschnitt des Zentralstücks (9), in dem der freitragende Abschnitt (5) des Injektionskanals (20) angeordnet ist, umfasst oder von diesem umfasst wird, und dass das Zentralstück (9) den Injektionskanal (20) einschließlich seines freitragenden Abschnitts (5) und die Zuleitung (40) enthält und einstückig ausgebildet ist.

2. Vorrichtung nach Anspruch 1, **dadurch gekennzeichnet, dass** das rohrförmige Element (36) ausschließlich dadurch lösbar mit dem Zentralstück (9) verbunden ist, dass die Verbindung eine Steckverbindung oder ein Bajonettverschluss ist.

3. Vorrichtung nach einem der voranstehenden Ansprüche, **dadurch gekennzeichnet, dass** der Träger (6), der Injektionskanal (20) und die Zuleitung (40) in einem Zentralstück (9) enthalten sind, und dass zumindest ein Teil des Einströmkanals (1) in einem Rohrstück (8) angeordnet oder gebildet ist, das lösbar mit dem Zentralstück (9) verbunden ist.

4. Vorrichtung nach einem der Ansprüche 1 bis 2, **dadurch gekennzeichnet, dass** der Einströmkanal (1) einstückig mit dem Zentralstück (9) ausgebildet ist.

5. Vorrichtung nach einem der voranstehenden Ansprüche, **dadurch gekennzeichnet, dass** der Einströmkanal (1) in dem Abschnitt, in dem der Träger (6) in den Einströmkanal (1) ragt, einen Bereich (4) ringförmigen Querschnitts aufweist, in den der Träger (6) ragt und dessen Innenradius vom Träger (6) begrenzt ist.

6. Vorrichtung nach einem der voranstehenden Ansprüche, **dadurch gekennzeichnet, dass** sich der Injektionskanal (20) in einem endständigen Abschnitt (23) zu seinem Auslass (24) aufweitet und/oder der Injektionskanal (20) angrenzend an seinen Auslass (24) einen freitragenden Abschnitt (5) aufweist, der nur mit einem radial in den Einströmkanal (1) ragenden Träger (6) verbunden ist.

7. Vorrichtung nach einem der voranstehenden Ansprüche, **dadurch gekennzeichnet, dass** sich der Injektionskanal (20) von seinem Einlass (25) in seinem ersten Abschnitt (21) zu einem zweiten Abschnitt (22) konstanten Durchmessers verjüngt und sich in einem angrenzenden endständigen Abschnitt (23) zu seinem Auslass (24) aufweitet.

8. Vorrichtung nach einem der voranstehenden Ansprüche, **dadurch gekennzeichnet, dass** der Träger (6) radial durch den Einströmkanal (6) ragt und der Einströmkanal (1) aus zwei Teilkanälen besteht, zwischen denen der Träger (6) angeordnet ist.

9. Vorrichtung nach einem der voranstehenden Ansprüche, **dadurch gekennzeichnet, dass** der Träger (6) mit dem freitragenden Abschnitt (5) des Injektionskanals (20) und dem Einströmkanal (1) einstückig ausgebildet ist.

10. Vorrichtung nach einem der voranstehenden Ansprüche, **dadurch gekennzeichnet, dass** das rohrförmige Element (36), in dem der Ausströmkanal (30) ausgebildet ist, einen endständigen Abschnitt (37) aufweist, der lösbar mit dem Einströmkanal (1) oder mit dem Zentralstück (9) verbunden ist und den freitragenden Abschnitt (5) des Injektionskanals (20) umfasst.

11. Vorrichtung nach einem der voranstehenden Ansprüche, **dadurch gekennzeichnet, dass** der Auslass (24) des Injektionskanals (20) einen kleineren Querschnitt hat als der Einlass (34) des Ausströmkanals (30).

12. Vorrichtung nach einem der voranstehenden Ansprüche, **dadurch gekennzeichnet, dass** der freitragende Abschnitt (5) des Injektionskanals (20) einen Außendurchmesser aufweist, der sich zum Auslass (24) des Injektionskanals (20) verringert.

13. Vorrichtung nach einem der voranstehenden Ansprüche, **dadurch gekennzeichnet, dass** ein Ring (48) lösbar mit und längsverschieblich entlang der Außenfläche des Ausströmkanals (30) verbunden ist und ein elastisches Schlauchstück (44), das zumindest einen Schlitz (45) in seiner Wand aufweist und an einem Ende verschlossen ist, an dem Ring (48) befestigt ist und den Auslass (35) des Ausströmkanals (30) umfasst.

14. Vorrichtung nach einem der voranstehenden Ansprüche, **dadurch gekennzeichnet, dass** eine Saugglocke (47) mit ihrem Innenvolumen mit dem Einlass (2) des Einströmkanals (1) verbunden ist.

15. Vorrichtung nach einem der voranstehenden Ansprüche, **dadurch gekennzeichnet, dass** ein dem rohrförmigen Element (36) gegenüberliegender Abschnitt des Zentralstücks (9) längs der Längsmittelachse (7) verschieblich in einer von einem Rohrstück (8) aufgespannten Ausnehmung angeordnet ist, die kein Gewinde aufweist.

16. Vorrichtung nach einem der voranstehenden Ansprüche, **dadurch gekennzeichnet, dass** der dem rohrförmigen Element gegenüberliegende Abschnitt des Zentralstücks (9) klemmend und drehbar in einer Ausnehmung eines Rohrstücks (8) angeordnet ist, in dem ein ringförmiger Abschnitt einer Zuleitung (40) für Druckfluid gebildet ist, der fluiddicht mit dem Injektionskanal (20) verbunden ist.

17. Verfahren zum Ansaugen eines Gegenstands mit einer Vorrichtung nach einem der voranstehenden Ansprüche durch Beaufschlagen der Zuleitung (40) mit einem Druckfluid und mit einem Schritt des Entfernens eines rohrförmigen Elements (36), in dem der Ausströmkanal (30) ausgebildet ist, und/oder des Entfernens eines Rohrstücks (8), in dem der Einströmkanal (1) ausgebildet ist, von einem Zentralstück (9), Reinigen zumindest eines von Zentralstück (9), rohrförmigem Element (36) und Rohrstück (8), und neuerliches Verbinden dieser miteinander.

## Claims

1. Device for generating negative pressure by means of a pressurized fluid, comprising an inflow channel (1) and an outflow channel (30), and an injection channel (20), the outlet (24) of which is arranged at a distance from the inlet (2) of the inflow channel (1), wherein
the inflow channel (1), the injection channel (20) and the outflow channel (30) are arranged along a common longitudinal center axis (7),
the injection channel (20) and the outflow channel (30) have round internal cross-sections, and
the injection channel (20) tapers in a first section (21) from its inlet (25) and has an outlet (24) in a terminal section (23), and
the injection channel (20) is contained, at least in sections, in a carrier (6) projecting radially into the inflow channel (1), and the inlet (25) of the injection channel (20) is connected to a supply line (40) for pressurized fluid, which is arranged inside the carrier (6) and has a connection section (42) extending radially to the longitudinal center axis (7),
wherein the inflow channel (1) forms a region (4) of annular cross-section around the cantilevered portion (5) of the injection channel (20) to adjacent the inlet (34) of the outflow channel (30),
the inlet (34) of the outflow channel (30) is arranged at a distance from the outlet (24) of the injection channel (20) or the outlet (24) of the injection channel (20) is arranged inside the outflow channel (3), and
the outflow channel (30) tapers in a first section (31) from its inlet (34) to a second section (32) of constant diameter and adjacently widens in a third section (33) to its outlet (35), wherein the carrier (6), the injection channel (20) and the feed line (40) are contained in a central piece (9), **characterized in that** the outflow channel (30) is formed in a tubular element (36) which is detachably connected to the central piece (9) exclusively **in that** an end portion (37) of the tubular element (36), in which the outflow channel (30) is formed, encompasses or is encompassed by the portion of the central piece (9) in which the cantilevered portion (5) of the injection channel (20) is arranged, and **in that** the central piece (9) contains the injection channel (20) including its cantilevered portion (5) and the feed line (40) and is formed in one piece.

2. The device according to claim 1, **characterized in that** the tubular element (36) is detachably connected to the central piece (9) exclusively by the connection being a plug-in connection or a bayonet lock.

3. Device according to one of the preceding claims, **characterized in that** the support (6), the injection channel (20) and the feed line (40) are contained in a central piece (9), and **in that** at least part of the inflow channel (1) is arranged or formed in a pipe piece (8) which is detachably connected to the central piece (9).

4. Device according to one of claims 1 to 2, **characterized in that** the inflow channel (1) is formed in one piece with the central piece (9).

5. Device according to one of the preceding claims, **characterized in that** in the section in which the carrier (6) projects into the inflow channel (1), the inflow channel (1) has an area (4) of annular cross-section into which the carrier (6) projects and the inner radius of which is delimited by the carrier (6).

6. Device according to one of the preceding claims, **characterized in that** the injection channel (20) widens in a terminal section (23) to its outlet (24) and/or the injection channel (20) has, adjacent to its outlet (24), a cantilevered section (5) which is connected only to a support (6) projecting radially into the inflow channel (1).

7. Device according to one of the preceding claims, **characterized in that** the injection channel (20) tapers from its inlet (25) in its first section (21) to a second section (22) of constant diameter and widens in an adjacent terminal section (23) to its outlet (24).

8. Device according to one of the preceding claims, **characterized in that** the carrier (6) projects radially through the inflow channel (6) and the inflow channel (1) consists of two partial channels between which the carrier (6) is arranged.

9. Device according to one of the preceding claims, **characterized in that** the carrier (6) is formed in one piece with the cantilevered section (5) of the injection channel (20) and the inflow channel (1).

10. Device according to one of the preceding claims, **characterized in that** the tubular element (36) in which the outflow channel (30) is formed has a terminal portion (37) which is detachably connected to the inflow channel (1) or to the central piece (9) and encloses the cantilevered portion (5) of the injection channel (20).

11. Device according to one of the preceding claims, **characterized in that** the outlet (24) of the injection channel (20) has a smaller cross-section than the inlet (34) of the outflow channel (30).

12. Device according to one of the preceding claims, **characterized in that** the cantilevered portion (5) of the injection channel (20) has an outer diameter that decreases toward the outlet (24) of the injection channel (20).

13. Device according to one of the preceding claims, **characterized in that** a ring (48) is detachably connected to and longitudinally slidable along the outer surface of the outflow channel (30) and a resilient tubing piece (44) having at least one slit (45) in its wall and closed at one end is attached to the ring (48) and encloses the outlet (35) of the outflow channel (30).

14. Device according to one of the preceding claims, **characterized in that** a suction bell (47) is connected with its inner volume to the inlet (2) of the inflow channel (1).

15. Device according to one of the preceding claims, **characterized in that** a portion of the central piece (9) opposite to the tubular element (36) is slidably arranged along the longitudinal center axis (7) in a recess spanned by a tubular piece (8) which does not have a thread.

16. Device according to one of the preceding claims, **characterized in that** the portion of the central piece (9) opposite the tubular element is arranged in a clamping and rotatable manner in a recess of a pipe piece (8) in which an annular portion of a supply line (40) for pressurized fluid is formed, which is connected in a fluid-tight manner to the injection channel (20).

17. Method of sucking an object a device according to one of the preceding claims by applying a pressurized fluid to the supply line (40) and comprising a step of removing a tubular member (36) in which the outflow channel (30) is formed and/or removing a pipe piece (8) in which the inflow channel (1) is formed from a central piece (9), cleaning at least one of the central piece (9), the tubular member (36) and the pipe piece (8), and reconnecting them to each other.

## Revendications

1. Dispositif pour générer une dépression au moyen d'un fluide sous pression, qui présente un canal d'entrée (1) et un canal de sortie (30) et un canal d'injection (20), dont la sortie (24) est disposée à une certaine distance de l'entrée (2) du canal d'entrée (1), dans lequel
le canal d'entrée (1), le canal d'injection (20) et le canal de sortie (30) sont disposés le long d'un axe central longitudinal commun (7),
le canal d'injection (20) et le canal de sortie (30) ont des sections intérieures rondes, et
le canal d'injection (20) se rétrécit dans une première section (21) à partir de son entrée (25) et comporte une sortie (24) dans une section d'extrémité (23) et
le canal d'injection (20) est contenu au moins par sections dans un support (6) faisant saillie radialement dans le canal d'entrée (1) et l'entrée (25) du canal d'injection (20) est reliée à une conduite d'alimentation (40) pour fluide sous pression, qui est disposée à l'intérieur du support (6) et a une section de raccordement (42) qui s'étend radialement par rapport à l'axe central longitudinal (7),
dans lequel le canal d'entrée (1) forme une zone (4) de section transversale annulaire autour de la partie en porte-à-faux (5) du canal d'injection (20) jusqu'à être adjacente à l'entrée (34) du canal de sortie (30),
l'entrée (34) du canal de sortie (30) est située à une certaine distance de la sortie (24) du canal d'injection (20) ou la sortie (24) du canal d'injection (20) est située à l'intérieur du canal de sortie (3) et
le canal de sortie (30) se rétrécit dans une première section (31) depuis son entrée (34) jusqu'à une deuxième section (32) de diamètre constant et s'élargit de manière adjacente dans une troisième section (33) jusqu'à sa sortie (35), le support (6), le canal d'injection (20) et le conduit d'alimentation (40) étant contenus dans une pièce centrale (9), **caractérisé en ce que** le canal de sortie (30) est formé dans un élément tubulaire (36), qui est relié de manière amovible à la pièce centrale (9) exclusivement par le fait qu'une section d'extrémité (37) de l'élément tubulaire (36), dans laquelle le canal de sortie (30) est formé, comprend la section de la pièce centrale (9), dans laquelle la section en porte-à-faux (5) du canal d'injection (20) est disposée, ou est entourée par celle-ci, et **en ce que** la pièce centrale (9) contient le canal d'injection (20), y compris sa section en porte-à-faux (5) et la conduite d'alimentation (40), et est réalisée d'un seul tenant.

2. Dispositif selon la revendication 1, **caractérisé en ce que** l'élément tubulaire (36) est relié de manière amovible à la pièce centrale (9) exclusivement par le fait que la liaison est une liaison par enfichage ou une liaison à fermenture à baïonnette.

3. Dispositif selon l'une des revendications précédentes, **caractérisé en ce que** le support (6), le canal d'injection (20) et la conduite d'alimentation (40) sont contenus dans une pièce centrale (9), et **en ce qu'**au moins une partie du canal d'entrée (1) est disposée ou formée dans une pièce tubulaire (8) qui est reliée de manière amovible à la pièce centrale (9).

4. Dispositif selon l'une des revendications 1 à 2, **caractérisé en ce que** le canal d'entrée (1) est formé d'une seule pièce avec la pièce centrale (9).

5. Dispositif selon l'une des revendications précédentes, **caractérisé en ce que** le canal d'entrée (1) présente, dans la partie où le support (6) fait saillie dans le canal d'admission (1), une zone (4) de section annulaire dans laquelle le support (6) fait saillie et dont le rayon intérieur est limité par le support (6).

6. Dispositif selon l'une des revendications précédentes, **caractérisé en ce que** le canal d'injection (20) s'élargit dans une section terminale (23) vers sa sortie (24) et/ou le canal d'injection (20) présente, de manière adjacente à sa sortie (24), une section en porte-à-faux (5) qui est reliée uniquement à un support (6) faisant saillie radialement dans le canal d'admission (1).

7. Dispositif selon l'une des revendications précédentes, **caractérisé en ce que** le canal d'injection (20) se rétrécit depuis son entrée (25) dans sa première section (21) jusqu'à une deuxième section (22) de diamètre constant et s'élargit dans une section terminale adjacente (23) jusqu'à sa sortie (24).

8. Dispositif selon l'une des revendications précédentes, **caractérisé en ce que** le support (6) fait saillie radialement à travers le canal d'entrée (6) et **en ce que** le canal d'entrée (1) est constitué de deux canaux partiels entre lesquels le support (6) est disposé.

9. Dispositif selon l'une des revendications précédentes, **caractérisé en ce que** le support (6) est formé d'une seule pièce avec la section en porte-à-faux (5) du canal d'injection (20) et le canal d'entrée (1).

10. Dispositif selon l'une des revendications précédentes, **caractérisé en ce que** l'élément tubulaire (36) dans lequel est formé le canal de sortie (30) comporte une partie d'extrémité (37) qui est reliée de manière amovible au canal d'entrée (1) ou à la pièce centrale (9) et qui comprend la partie en porte-à-faux (5) du canal d'injection (20).

11. Dispositif selon l'une des revendications précédentes, **caractérisé en ce que** la sortie (24) du canal d'injection (20) a une section transversale plus petite que l'entrée (34) du canal de sortie (30).

12. Dispositif selon l'une des revendications précédentes, **caractérisé en ce que** la partie en porte-à-faux (5) du canal d'injection (20) présente un diamètre extérieur qui diminue en direction de la sortie (24) du canal d'injection (20).

13. Dispositif selon l'une des revendications précédentes, **caractérisé en ce qu'**une bague (48) est reliée de manière amovible et mobile longitudinalement le long de la surface extérieure du canal de sortie (30) et **en ce qu'**une pièce tubulaire élastique (44), présentant au moins une fente (45) dans sa paroi et fermée à une extrémité, est fixée à la bague (48) et entour la sortie (35) du canal de sortie (30).

14. Dispositif selon l'une des revendications précédentes, **caractérisé en ce qu'**une cloche d'aspiration (47) est reliée par son volume intérieur à l'entrée (2) du canal d'entrée (1).

15. Dispositif selon l'une des revendications précédentes, **caractérisé en ce qu'**une partie de la pièce centrale (9) opposée à l'élément tubulaire (36) est disposée de manière à pouvoir se déplacer le long de l'axe central longitudinal (7) dans un évidement défini par une pièce tubulaire (8) et qui ne présente pas de filetage.

16. Dispositif selon l'une des revendications précédentes, **caractérisé en ce que** la partie de la pièce centrale (9) opposée à l'élément tubulaire est disposée de manière à être serrée et à pouvoir tourner dans un évidement d'une pièce tubulaire (8), dans laquelle est formée une partie annulaire d'une conduite d'alimentation (40) pour un fluide sous pression, qui est reliée de manière étanche au fluide au canal d'injection (20).

17. Procédé d'aspiration d'un objet avec un dispositif selon l'une des revendications précédentes, en appliquant un fluide sous pression à la conduite d'alimentation (40) et comprenant une étape consistant à retirer un élément tubulaire (36) dans lequel est formé le canal de sortie (30) et/ou à retirer un élément tubulaire (8) dans lequel est formé le canal d'entrée (1) d'une pièce centrale (9), à nettoyer au moins l'un de la pièce centrale (9), de l'élément tubulaire (36) et de l'élément tubulaire (8), et à les raccorder de nouveau les uns aux autres.
